(19) Europäisches Patentamt
European Patent Office
Office européen des brevets

(11) EP 0 530 572 B1

(12) **EUROPÄISCHE PATENTSCHRIFT**

(45) Veröffentlichungstag und Bekanntmachung des Hinweises auf die Patenterteilung:
**02.04.1997 Patentblatt 1997/14**

(51) Int Cl.6: **C08L 71/12**, C08L 25/02, C08K 5/5317

(21) Anmeldenummer: **92113967.1**

(22) Anmeldetag: **17.08.1992**

(54) **Thermooxidationsbeständige thermoplastische Formmassen**

Thermooxidation resistant thermoplastic moulding masses

Masses à mouler thermoplastiques résistant à l'oxydation thermique

(84) Benannte Vertragsstaaten:
**BE DE FR GB NL**

(30) Priorität: **28.08.1991 DE 4128509**

(43) Veröffentlichungstag der Anmeldung:
**10.03.1993 Patentblatt 1993/10**

(73) Patentinhaber: **BASF Aktiengesellschaft**
**67063 Ludwigshafen (DE)**

(72) Erfinder:
- **Zeltner, Doris, Dr.**
**W-6725 Roemerberg (DE)**
- **Weiss, Robert, Dr.**
**W-6700 Ludwigshafen (DE)**
- **Seelert, Stefan, Dr.**
**W-6710 Frankenthal (DE)**

(56) Entgegenhaltungen:
**EP-A- 0 038 183** **FR-A- 2 125 515**
**US-A- 3 367 870**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 530 572 B1

## Beschreibung

Die Erfindung betrifft thermoplastische Formmassen mit verbesserter Thermooxidationsbeständigkeit, enthaltend

A) 5 bis 94,95 Gew.% eines Polyphenylenethers,
B) 5 bis 94 Gew.% eines vinylaromatischen Polymeren,
C) 0,05 bis 8 Gew.% eines Phosphonats der allgemeinen Formel I

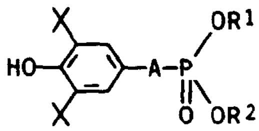

I

in der die Substituenten folgende Bedeutung haben:

A ein aliphatisches, araliphatisches, cycloaliphatisches oder aromatisches Brückenglied mit bis zu 10 C-Atomen,
$R^1$,$R^2$ gleiche oder verschiedene Alkyl-, Aryl- oder cycloaliphatische Reste mit bis zu 10 C-Atomen,

D) 0 bis 60 Gew.% üblicher Zusatzstoffe in wirksamen Mengen.

Weiterhin betrifft die Erfindung die Verwendung dieser Formmassen zur Herstellung von Folien, Fasern und Formkörpern sowie die aus den erfindungsgemäßen Formmassen erhältlichen Formkörper.

Phosphonate sind als Zusatz in Polyphenylenether/Polystyrol-Blends bekannt, wobei diese meist als Flammschutzmittel wirken.

Aus der US-A 4 520 152, US-A 4 390 477 und US-A 4 228 063 sind cyclische Phosphonate wie Diphenylpentaerythritoldiphosphonat als Flammschutzadditive bekannt.

Kombinationen von cyclischen Phosphonaten oder Salzen der Phosphonsäure mit Triarylphosphonaten sind als Flammschutzmittel aus der EP-A 75 863 und EP-A 324 716 bekannt.

Die Stabilisierung von Polyphenylenetherformmassen mit sterisch gehinderten Phenolen ist aus der WO 82/04057 bekannt.

Aus der EP-A 38 183 ist bekannt, das Phosphonate mit aromatischen Substituenten gegebenenfalls in Kombination mit sterisch gehinderten Phenolen die Hitzestabilität von Polyphenylenether-Blends erhöhen.

Die Thermooxidationsbeständigkeit und die Kälteschlagzähigkeit solcher Formmassen sind jedoch nicht zufriedenstellend.

Der vorliegenden Erfindung lag daher die Aufgabe zugrunde, Polyphenylenether Blends mit vinylaromatischen Polymeren zur Verfügung zu stellen, die eine verbesserte Thermooxidationsbeständigkeit und gleichzeitig gute mechanische Eigenschaften insbesondere eine gute Kälteschlagzähigkeit aufweisen.

Darüber hinaus sollte eine bessere Verarbeitung dieser Formmassen ermöglicht werden insbesondere im Hinblick auf eine leichtere Entformbarkeit z.B. beim Spritzguß.

Demgemäß wurden die eingangs definierten Formmassen gefunden. Bevorzugte Massen dieser Art und ihre Verwendung sind den Unteransprüchen zu entnehmen.

Die in den erfindungsgemäßen Formmassen enthaltenen Polyphenylenether A) sind an sich bekannt. Die Polyphenylenether A) sind in den erfindungsgemäßen Formmassen in einer Menge von 5 bis 94,95, bevorzugt 15 bis 84,9 und insbesondere 30 bis 69,9 Gew.% enthalten.

Es handelt sich um Verbindungen auf Basis von substituierten, insbesondere disubstituierten Polyphenylenethern, wobei der Ethersauerstoff der einen Einheit an den Benzolkern der benachbarten Einheit gebunden ist. Vorzugsweise werden in 2- und/oder 6-Stellung zum Sauerstoffatom substituierte Polyphenylenether verwendet. Als Beispiele für Substituenten sind Halogenatome wie Chlor oder Brom und Alkylreste mit 1 bis 4 Kohlenstoffatomen, die vorzugsweise kein $\alpha$-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Beispiele für Polyphenylenether sind Poly(2,6-dilauryl-1,4-phenylenether), Poly(2,6-diphenyl-1,4-phenylenether),

Poly(2,6-dimethoxi-1,4-phenylenether), 6-stearyloxi-1,4-phenylenether), Poly(2-methyl-6-phenyl-1,4-phenylenether), Poly(2-ethyl-6-stearyloxi-1,4-phenylenether), Poly(2,6-dichlor-1,4-phenylenether), poly(2-methyl-6-phenyl-1,4-phenylenether), Poly(2,6-di-benzyl-1,4-phenylenether), poly(2-ethoxi-1,4-phenylenether), benzyl-1,4-phenylenether), Poly (2-ethoxi-1,4-phenylenether), Bevorzugt werden Polyphenylenether eingesetzt, bei denen die Substituenten Alkylreste mit 1 bis 4 Kohlenstoffatomen sind, wie poly(2,6-dimethyl-1,4-phenylenether), Poly(2,6-diethyl-1,4-phenylenether), Poly(2-methyl-6-ethyl-1,4-phenylenether), Poly(2-methyl-6-propyl-1,4-phenylenether), Poly(2,6-dipropyl-1,4-phenylenether) und Poly(2-ethyl-6-propyl-1,4-phenylenether).

Unter Polyphenylenethern im Sinne der Erfindung sollen auch solche verstanden werden, die mit Monomeren wie Fumarsäure, Maleinsäure oder Maleinsäureanhydrid modifiziert sind.

Derartige Polyphenylenether sind u.a. in der WO 87/00540 beschrieben.

Hinsichtlich der physikalischen Eigenschaften der Polyphenylenether werden solche bevorzugt, die eine Grenzviskosität von 0,2 bis 0,7 dl/g, gemessen in Choroform bei 30°C, aufweisen.

Diese Grenzviskosität entspricht einem mittleren Molekulargewicht (Gewichtsmittel) $\overline{M}_w$ von 10.000 bis 50.000, bevorzugt 25.000 bis 50.000 und insbesondere 40.000 bis 50.000.

Weiterhin werden bevorzugt Polyphenylenether in den erfindungsgemäßen Formmassen eingesetzt, die ein mittleres Molekulargewicht $\overline{M}_w$ (Gewichtsmittel) von 8.000 bis 30.000, bevorzugt 12.000 bis 25.000 und insbesondere 15.000 bis 25.000 aufweisen.

Dies entspricht einer Grenzviskosität von 0,18 bis 0,45, bevorzugt von 0,25 bis 0,42 und insbesondere von 0,3 bis 0,42 dl/g, gemessen in Chloroform bei 30°C.

Die Bestimmung der Molekulargewichtsverteilung erfolgt im allgemeinen mittels Gelpermeationschromatographie (Shodex-Trennsäulen 0,8 x 50 cm des Typs A 803, A 804 und A 805 mit THF als Elutionsmittel bei Raumtemperatur). Die Lösung der PPE-Proben in THF erfolgt unter Druck bei 110°C, wobei 0,16 ml einer 0,25 gew.%igen Lösung eingerührt werden.

Die Detektion erfolgt mit einem UV-Detektor. Die Eichung der Säulen wurde mit PPE-Proben durchgeführt, deren absolute kulargewichtsverteilungen durch eine GPC-Laser-Lichtstreuungskombination bestimmt wurde.

Selbstverständlich können auch Mischungen von Polyphenylenethern mit unterschiedlichen Molekulargewichten eingesetzt werden, wobei das Mischungsverhältnis beliebig ist.

Die Komponente B) ist in den erfindungsgemäßen Formmassen in Mengen von 5 bis 94, bevorzugt 15 bis 80 und insbesondere 25 bis 70 Gew.% enthalten, bezogen auf das Gesamtgewicht der Komponenten A) bis C) sowie gegebenenfalls D).

Die Komponente B) ist ein vinylaromatisches Polymer, das vorzugsweise mit dem eingesetzten Polyphenylenether verträglich ist.

Beispiele für bevorzugte, mit Polyphenylenethern verträgliche vinylaromatische Polymere sind der Monographie von 0. Olabisi, Polymer-Polymer Miscibility, 1979, S. 224 bis 230 und 245 zu entnehmen.

Es kommen sowohl Homo- als auch Copolymerisate von vinylaromatischen Monomeren mit 8 bis 12 C-Atomen in Betracht.

Als monovinylaromatische Verbindungen kommen dabei insbesondere Styrol in Betracht, ferner die kern- oder seitenkettenalkylierten Styrole. Als Beispiele seien Chlorstyrol, α-Methylstyrol, Styrol, p-Methylstyrol, Vinyltoluol und p-tert.-Butylstyrol genannt. Vorzugsweise wird jedoch Styrol allein verwendet.

Die Homopolymerisate werden im allgemeinen nach den bekannten Verfahren in Masse, Lösung oder Suspension hergestellt (vgl. Ullmanns Enzyklopädie der techn. Chemie, Band 19, Seiten 265 bis 272, Verlag Chemie, Weinheim 1980). Die Homopolymerisate können Gewichtsmittel des Molekulargewichts $M_w$ von 100 bis 300.000 aufweisen, die nach üblichen Methoden bestimmt werden können.

Als Comonomere zur Herstellung von Copolymerisaten kommen z.B. (Meth)acrylsäure, (Meth)acrylsäurealkylester mit 1 bis 4 C-Atomen im Alkylrest, Acrylnitril und Maleinsäureanhydrid sowie Maleinsäureimide, Acrylamid und Methacrylamide sowie deren N,N- oder N-alkylsubstituierten Derivate mit 1 bis 10 C-Atomen im Alkylrest in Frage.

Die Comonomeren sind je nach ihrer chemischen Struktur in unterschiedlichen Mengen in den Styrolpolymerisaten enthalten. Entscheidend für den Gehalt an Comonomeren im Mischpolymerisat ist die Mischbarkeit des Copolymerisates mit dem Polyphenylenether. Solche Mischungsgrenzen sind bekannt und beispielsweise in der US-P 4 360 618, 4 405 753 und in der Veröffentlichung von J.R. Fried, G.A. Hanna, Polymer Eng. Scie. Band 22 (1982) Seite 705 ff beschrieben. Die Herstellung der Copolymeren erfolgt nach bekannten Verfahren, die beispielsweise in Ullmanns Enzyklopädie der techn. Chemie, Band 19, Seite 273 ff, Verlag Chemie, Weinheim (1980) beschrieben sind. Die Copolymerisate haben im allgemeinen Gewichtsmittel des Molekulargewichtes ($M_w$) von 10.000 bis 300.000, die nach üblichen Methoden bestimmt werden können.

Bei der Komponente B) handelt es sich vorzugsweise um schlagfest modifiziertes Polystyrol, dessen Kautschukgehalt im allgemeinen von 3 bis 20 Gew.%, vorzugsweise von 4 bis 15 Gew.% beträgt.

Die meist angewandten Verfahren zur Herstellung schlagzähmodifizierter Styrolpolymerisate sind die Polymerisation in Masse oder Lösung in Gegenwart eines Kautschuks, wie es beispielsweise in der US-Patentschrift 2 694 692

beschrieben ist, und Verfahren zur Massesuspensionspolymerisation, wie sie beispielsweise in der US-Patentschrift 2 862 906 beschrieben sind. Selbstverständlich sind auch andere Verfahren anwendbar, sofern die gewünschte Teilchengröße der Kautschukphase eingestellt wird.

Als Kautschuke werden die üblicherweise für die Schlagzähmodifizierung von Styrolpolymerisaten gebräuchlichen natürlichen oder synthetischen Kautschuke eingesetzt. Geeignete Kautschuke im Sinne der Erfindung sind neben Naturkautschuk z.B. Polybutadien, Polyisopren und Mischpolymerisate des Butadiens und/oder Isoprens mit Styrol und anderen Comonomeren, die eine Glastemperatur, bestimmt nach K.H. Illers und H. Breuer, Kolloidzeitschrift 190 (1), 16 - 34 (1963), unter -20°C besitzen.

Es können auch Mischungen von schlagfest modifizierten und nichtschlagfest modifizierten vinylaromatischen Polymeren eingesetzt werden, wobei das Mischungsverhältnis beliebig ist.

Der Anteil der Phosphonatverbindungen C) in den erfindungsgemäßen Formmassen beträgt 0,05 bis 8, vorzugsweise 0,1 bis 5 und insbesondere 0,1 bis 1 Gew.%.

Diese Verbindungen weisen die allgemeine Formel I auf

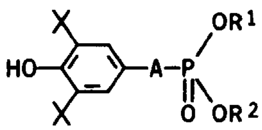

I

in der die Substituenten folgende Bedeutung haben:

A ein aliphatisches, araliphatisches, cycloaliphatisches oder aromatisches Brückenglied mit bis zu 10 C-Atomen,

$R^1$, $R^2$ gleiche oder verschiedene Alkyl-, Aryl- oder cycloaliphatische Reste mit bis zu 10 C-Atomen.

Die definitionsgemäßen Reste $R^1$ und $R^2$ können geradkettige oder verzweigte gesättigte Alkylgruppen sein, die insgesamt bis zu 10, vorzugsweise von 1 bis 8 und insbesondere 1 bis 5 C-Atome enthalten. Beispiele für derartige Reste sind Methyl, n-Butyl, t-Butyl, Propyl, wobei der Ethylrest und Propylrest bevorzugt sind. Beispiele für Aryl oder cycloaliphatische Reste $R^1$ und $R^2$ sind Phenyl, Benzyl, Naphthyl, wobei Phenyl und Benzyl bevorzugt sind.

Bevorzugte Brückenglieder A sind aliphatische und aromatische mit bis zu 10, bevorzugt bis zu 8 C-Atomen, wobei die Phenylen- oder Methylen- oder Ethylen- sowie Propylengruppe als Brückenglieder besonders bevorzugt sind.

Eine besonders bevorzugte Phosphonatverbindung hat die Struktur

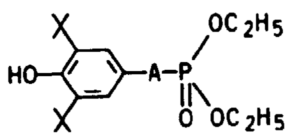

und ist unter der Bezeichnung Irganox® 1222 (Ciba-Geigy) im Handel erhältlich.

Selbstverständlich können auch Mischungen derartiger Phosphonatverbindungen C) eingesetzt werden, wobei das Mischungsverhältnis beliebig ist.

Als Komponente D) können die erfindungsgemäßen thermoplastischen Formmassen auch übliche Zusatzstoffe und Verarbeitungshilfsmittel enthalten. Der Anteil dieser Zusätze beträgt im allgemeinen nicht mehr als 60, insbesondere nicht mehr als 50 und ganz besonders nicht mehr als 30 Gew.%, bezogen auf das Gesamtgewicht der Komponente A) bis D).

Als Zusatzstoffe seien Schlagzähmodifier genannt, die in Mengen bis zu 20 Gew.-%, bevorzugt bis zu 15 Gew.-% enthalten sein können und welche verschieden von Komponente B) sind.

Geeignet sind übliche Kautschuke, z.B. Acrylatkautschuk und Polymerisate konjugierter Diene, wie Polybutadienkautschuk und Polyisoprenkautschuk. Die Dienpolymerisate können, in an sich bekannter Weise, teilweise oder vollständig hydriert sein. Außerdem kommen z.B. in Betracht: Acrylnitrilbutadienkautschuk, hydrierter Styrolbutadienkautschuk, Ethylen-Propylen-Dien-Kautschuk, Polybutylen- und Polyoctenamerkautschuke, Ionomere, Blockcopolymere aus vinylaromatischen Monomeren mit Dienen wie Butadien oder Isopren (an sich bekannt aus EP-A 62 282) mit dem Aufbau $M^1M^2$-, $M^1M^2M^1M^2$- oder $M^1M^2M^1$-, wobei diese Blockpolymerisate auch Segmente mit statistischer Verteilung enthalten können, sowie Stern-Block-Copolymere. Als besonders geeignet haben sich Polymerisate konjugierter Diene wie Polybutadienkautschuk oder Polyisoprenkautschuk erwiesen. Derartige synthetische Kautschuke sind dem Fachmann geläufig und zusammenfassend in "Ullmanns Encyklopädie der Technischen Chemie", 4. Auflage, Bd. 13, Seiten 595 bis 634, Verlag Chemie GmbH, Weinheim 1977, beschrieben.

Als Zusatzstoffe seien genannt Hitze- und Lichtstabilisatoren, Gleit- und Entformungsmittel, Färbemittel, wie Farbstoffe und Pigmente in üblichen Mengen. Weitere Zusatzstoffe sind Verstärkungsmittel wie Glasfasern, Asbestfasern, Kohlenstoff-Fasern, aromatische Polyamidfasern und/oder Füllstoffe, Gipsfasern, synthetische Calciumsilikate, Kaolin, calciniertes Kaolin, Wollastonit, Talkum und Kreide.

Auch niedermolekulare oder hochmolekulare Polymere kommen als Zusatzstoffe in Betracht, wobei Polyethylenwachs als Gleitmittel besonders bevorzugt ist.

Als Pigmente kommen z.B. in Frage $TiO_2$ und Ruße.

Bei Verwendung von $TiO_2$ liegt die mittlere Teilchengröße im Bereich von 50 - 400 nm, insbesondere 150 - 240 nm. Techn. Verwendung finden Rutile und Anatas, die gegebenenfalls mit Metalloxiden, z.B. Al-oxid, Si-Oxiden, Oxiden des Zn oder Siloxanen beschichtet sind.

Als Ruße sollen mikrokristalline, feinteilige Kohlenstoffe verstanden werden (vgl. Kunststofflexikon, 7. Auflage 1980).

Als geeignet seien die Ofenruße, Acetylenruße, Gasruße sowie die durch thermische Herstellung erhältlichen Thermalruße genannt.

Die Teilchengrößen liegen vorzugsweise im Bereich von 0,01 bis 0,1 µm und die Oberflächen im Bereich von $10^2$ bis $10^4$ $m^2/g$ (BET/ASTM D 3037) bei DBP-Absorptionen von $10^2$ bis $10^3$ ml/100 g (ASTM d 2414).

Als Flammschutzmittel D) kommen insbesondere phosphorhaltige Verbindungen in Mengen bis zu 20 Gew.% in Betracht. Beispiele hierfür sind Phosphorsäureester, Phosphinsäureester, Phosphinoxide, Phosphor und org. Phosphate.

Über Art und Menge dieser Zusatzstoffe lassen sich die gewünschten Eigenschaften der Endprodukte in weitem Maße steuern.

Die Herstellung der erfindungsgemäßen thermoplastischen Formmassen erfolgt zweckmäßigerweise durch Mischen der Komponenten bei Temperaturen im Bereich von 250 bis 320°C in üblichen Mischvorrichtungen, wie z.B. Knetern, Banburymischern und Einschneckenextrudern, vorzugsweise mit einem Zweischneckenextruder. Um eine möglichst homogene Formmasse zu erhalten, ist eine intensive Durchmischung notwendig. Die Reihenfolge des Mischens der Komponenten kann variiert werden, es können zwei oder gegebenenfalls drei Komponenten vorgemischt sein oder es können auch alle Komponenten gemeinsam gemischt werden.

Aus den erfindungsgemäßen thermoplastischen Formmassen lassen sich z.B. durch Spritzguß oder Extrusion Formkörper mit guten mechanischen Eigenschaften herstellen, die insbesondere eine verbesserte Fließfähigkeit und Kälteschlagzähigkeit sowie eine sehr gute Thermooxidationsbeständigkeit aufweisen.

Zusätzlich ist die Verarbeitung zu Formkörpern problemlos, da die Formmassen eine bessere Entformbarkeit, z. B. beim Spritzguß zeigen.

Infolge dieses Eigenschaftsspektrums eignen sich die aus den erfindungsgemäßen Formmassen herstellbaren Formkörper besonders für Anwendungen im Elektrosektor.

Beispiele

Es wurden folgende Komponenten eingesetzt:

Komponente A:

A(1): Poly-2,6-dimethyl-1,4-phenylenether mit einem mittleren Molekulargewicht ($\bar{M}_w$) von 16.000.

A(2): Poly-2,6-dimethyl-1,4-phenylenether mit einem mittleren Molekulargewicht ($\bar{M}_w$) von 24.000.

A(3): Poly-2,6-dimethyl-1,4-phenylenether mit einem mittleren Molekulargewicht ($\bar{M}_w$) von 40.000.

A(4): Poly-2,6-dimethyl-1,4-phenylenether mit einem mittleren Molekulargewicht ($\bar{M}_w$) von 43.000.

Komponente B:

B(1): Schlagfestes Polystyrol® 577 F der BASF AG mit 8,1 Gew.% Polybutadien, mittlere Teilchengröpe ($d_{50}$-Wert) 1 µm, Zellteilchenmorphologie.

B(2): Schlagfestes Polystyrol® KR2797 der BASF AG mit 13 Gew.% Polybutadien, mittlere Teilchengröpe ($d_{50}$-Wert) 2 - 3 µm, Zellteilchenmorphologie.

Komponente C:

C(1): Irganox® 1222 der Fa. Ciba-Geigy

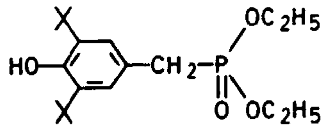

C(2): Diethylphenylphosphonat (zum Vgl. gemäß EP-A 38 138)

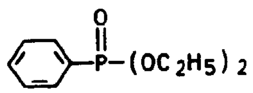

C(3): Irganox® 1076 der Fa. Ciba-Geigy (zum Vergleich gemäß WO 82/04057)

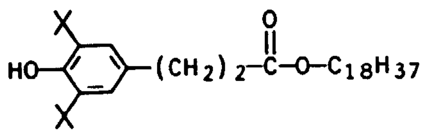

Komponente D:

Ein hydrierter Styrolbutadienstyrolblockkautschuk mit einem Polybutadiengehalt von 70 Gew.% (Kraton® G 1650 der Firma Shell AG)

Herstellung der Formmassen

Die Komponenten A) bis D) wurden auf einem Zweischneckenextruder bei 290°C gemischt und aufgeschmolzen. Der Schmelzstrang wurde extrudiert, gekühlt und granuliert. Das getrocknete Granulat wurde bei 280°C zu Normprüfkörpern gespritzt.

Die Thermooxidationsbeständigkeit wurde in einem Durchstoßtest ermittelt. Zu diesem Zweck wurden Probekörper 7 Tage bzw. 14 Tage in einem Umluft-Trockenschrank bei 110°C gelagert, wonach die Durchstoßarbeit $W_{ges}$ nach DIN 53 443 bestimmt wurde. Als Vergleich dienten Probekörper, die keiner Wärmelagerung unterzogen wurden.

Die Entformbarkeit wurde mittels einer Entformungskraftmessung ermittelt. An zylinderförmigen Spritzlingen (Entformungshülsen) der Abmessung 0,86 x 60 mm, der Wanddicke von 2 mm und einem Volumen von 33 $cm^3$ wurde bei einer Spritzgußmaschine mit rollengelagertem Auswerferantrieb die Reibung zwischen Probekörper und Kern in der Anfangsphase des Entformungsvorgangs erfaßt.

Weiterhin wurde die Kerbschlagzähigkeit nach DIN 53 453 bei -40°C bestimmt.

Die Zusammensetzungen der Formmassen und die Ergebnisse der Messungen sind den Tabellen zu entnehmen.

Tabelle 1

| Bsp. | Komponente A [Gew.%] | | Komponente B [Gew.%] | | Komponente C [Gew.%] | | Komponente D [Gew.%] | $W_{ges}$ [Nm] 0d, 110°C | 7d, 110°C | 14d, 110°C | Entformungskraft [N] |
|---|---|---|---|---|---|---|---|---|---|---|---|
| 1 | A(1) | 69 | B(1) | 30 | C(1) | 1,0 | - | 44 | 34 | 22 | 320 |
| 2 | A(3) | 69 | B(1) | 30 | C(1) | 1,0 | - | 46 | 37 | 21 | 750 |
| 3 | A(2) | 30 | B(1) | 67 | C(1) | 1,0 | 2,7 | 53 | 46 | 37 | 410 |
| 4* | A(2) | 30 | B(1) | 67 | C(2)* | 1,0 | 2,7 | 51 | 43 | 34 | 430 |
| 5* | A(3) | 30 | B(1) | 67 | C(2)*<br>C(3)* | 0,15<br>0,15 | 2,7 | 55 | 44 | 37 | 810 |

*) zum Vergleich

Tabelle 2

| Bsp. | Komponente A [Gew.%] | | Komponente B [Gew.%] | | Komponente C [Gew.%] | | Komponente D [Gew.%] | $W_{ges}$ [Nm] 0d, 110°C | 7d, 110°C | 14d, 110°C | $a_K$ bei -40°C [kJ/m2] |
|---|---|---|---|---|---|---|---|---|---|---|---|
| 6 | A(4) | 44,5 | B(2) | 52,2 | C(1) | 0,4 | 2,9 | 54 | 46 | 39 | 8,2 |
| 7* | A(4) | 44,5 | B(2) | 52,2 | C(2)* | 0,4 | 2,9 | 52 | 40 | 28 | 7,0 |
| 8* | A(4) | 44,5 | B(2) | 52,2 | C(3)* | 0,4 | 2,9 | 49 | 34 | 19 | 6,9 |
| 9 | A(4) | 35,0 | B(2) | 57,0 | C(1) | 1,0 | 7 | 55 | 50 | 43 | 9,1 |
| 10* | A(4) | 35,0 | B(2) | 57,0 | C(2)* | 0,5 | 7 | 52 | 47 | 34 | 7,2 |
| | | | | | C(3)* | 0,5 | | | | | |

*) zum Vergleich

## Patentansprüche

1. Thermoplastische Formmassen mit verbesserter oxidationsbeständigkeit, enthaltend

   A) 5 bis 94,95 Gew.% eines Polyphenylenethers,
   B) 5 bis 94 Gew.% eines vinylaromatischen Polymeren,
   C) 0,05 bis 8 Gew.% eines Phosphonats der allgemeinen Formel I

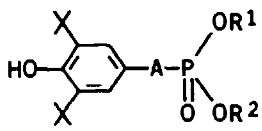

I

   in der die Substituenten folgende Bedeutung haben:

   A ein aliphatisches, araliphatisches, cycloaliphatisches oder aromatisches Brückenglied mit bis zu 10 C-Atomen,
   $R^1$,$R^2$ gleiche oder verschiedene Alkyl-, Aryl- oder cycloaliphatische Reste mit bis zu 10 C-Atomen,

   D) 0 bis 60 Gew.% üblicher Zusatzstoffe in wirksamen Mengen.

2. Thermoplastische Formmassen nach Anspruch 1, enthaltend

   A) 15 bis 84,9 Gew.%
   B) 15 bis 80 Gew.%
   C) 0,1 bis 5 Gew.%.

3. Thermoplastische Formmassen nach den Ansprüchen 1 oder 2, in denen die Komponente C) folgende Struktur hat:

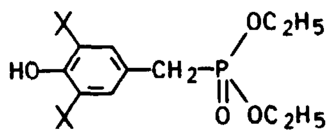

4. Thermoplastische Formmassen nach den Ansprüchen 1 bis 3, in denen der Polyphenylenether A) ein mittleres Molekulargewicht von 8.000 bis 30.000 aufweist.

5. Thermoplastische Formmassen nach den Ansprüchen 1 bis 3, in denen der Polyphenylenether A) ein mittleres Molekulargewicht von 40.000 bis 50.000 aufweist.

6. Verwendung der thermoplastische Formmassen gemäß den Ansprüchen 1 bis 5 zur Herstellung von Fasern, Folien und Formkörpern.

7. Formkörper hergestellt aus Formmassen gemäß den Ansprüchen 1 bis 5.

8. Verwendung von Phosphonatverbindungen der allgemeinen Formel I

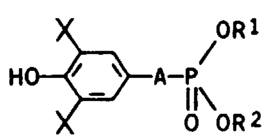

I

in der die Substituenten folgende Bedeutung haben:

A ein aliphatisches, araliphatisches, cycloaliphatisches oder aromatisches Brückenglied mit bis zu 10 C-Atomen,
$R^1$,$R^2$ gleiche oder verschiedene Alkyl-, Aryl- oder cycloaliphatische Reste mit bis zu 10 C-Atomen,

zur Verbesserung der Thermooxidationsbeständigkeit von Polyphenylenether Blends mit vinylaromatischen Polymeren.

**Claims**

**1.** Thermoplastic molding materials having improved stability to thermal oxidation, comprising

A) from 5 to 94.95% by weight of a polyphenylene ether,
B) from 5 to 94% by weight of an aromatic vinyl polymer,
C) from 0.05 to 8% by weight of a phosphonate of the general formula I

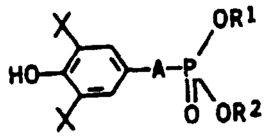

I

where

A is an aliphatic, araliphatic cycloaliphatic or aromatic bridge member having up to 10 carbon atoms, and
$R^1$ and $R^2$ are identical or different alkyl, aryl or cycloaliphatic radicals having up to 10 carbon atoms,

D) from 0 to 60% by weight of customary additives in effective amounts.

**2.** Thermoplastic molding materials as claimed in claim 1, comprising

A) from 15 to 84.9% by weight
B) from 15 to 80% by weight
C) from 0.1 to 5% by weight.

**3.** Thermoplastic molding materials as claimed in claim 1 or 2, wherein component C) has the following structure:

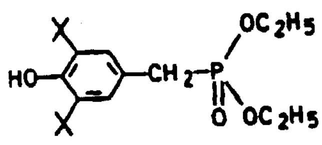

**4.** Thermoplastic molding materials as claimed in any of claims 1 to 3, wherein the polyphenylene ether A) has an average molecular weight of from 8000 to 30,000.

**5.** Thermoplastic molding materials as claimed in any of claims 1 to 3, wherein the polyphenylene ether A) has an average molecular weight of from 40,000 to 50,000.

**6.** The use of the thermoplastic molding materials of any of claims 1 to 5 for manufacturing fibers, films/sheets and shapes.

**7.** Shapes manufactured from molding materials as claimed in any of claims 1 to 5.

**8.** The use of phosphonate compounds of the general formula I

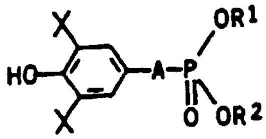

I

where

A is an aliphatic, araliphatic, cycloaliphatic or aromatic bridge member having up to 10 carbon atoms, and

$R^1$ and $R^2$ are identical or different alkyl, aryl or cycloaliphatic radicals having up to 10 carbon atoms,

for improving the thermal-oxidative stability of polyphenylene ether blends with aromatic vinyl polymers.

**Revendications**

**1.** Masses à mouler thermoplastiques manifestant une résistance améliorée à la thermo-oxydation, contenant

A) de 5 à 94,95% en poids d'un polyphénylène-éther,
B) de 5 à 94% en poids d'un polymère vinylaromatique,
C) de 0,05 à 8% en poids d'un phosphonate répondant à la formule générale I

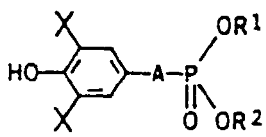

I

dans laquelle les substituants ont la signification ci-après:

A représente une liaison pontée aliphatique, araliphatique, cycloaliphatique ou aromatique contenant jusqu'à 10 atomes de carbone,

$R^1$, $R^2$ représentent des radicaux alkyle, aryle ou cycloaliphatiques identiques ou différents contenant jusqu'à 10 atomes de carbone,

D) de 0 à 60% en poids d'additifs habituels dans des quantités efficaces.

**2.** Masses à mouler thermoplastiques selon la revendication 1, contenant

A) de 15 à 84,9% en poids,
B) de 15 à 80% en poids,
C) de 0,1 à 5% en poids.

**3.** Masses à mouler thermoplastiques selon la revendication 1 ou 2, dans lesquelles le composant C) possède la structure ci-après:

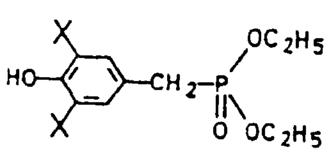

**4.** Masses à mouler thermoplastiques selon les revendications 1 à 3, dans lesquelles le polyphénylène-éther A)

présente un poids moléculaire moyen de 8.000 à 30.000.

**5.** Masses à mouler thermoplastiques selon les revendications 1 à 3, dans lesquelles le polyphénylène-éther A) présente un poids moléculaire moyen de 40.000 à 50.000.

**6.** Utilisation des masses à mouler thermoplastiques selon les revendications 1 à 5, pour la préparation de fibres, de feuilles minces et de corps moulés.

**7.** Corps moulés préparés à partir des masses à mouler selon les revendications 1 à 5.

**8.** Utilisation de composés phosphonates répondant à la formule générale I

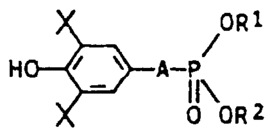

I

dans laquelle les substituants ont la signification ci-après:

A représente une liaison pontée aliphatique, araliphatique, cycloaliphatique ou aromatique contenant jusqu'à 10 atomes de carbone,

$R^1$, $R^2$ représentent des radicaux alkyle, aryle ou cycloaliphatiques identiques ou différents contenant jusqu'à 10 atomes de carbone,

pour améliorer la résistance à la thermo-oxydation de mélanges de polyphénylène-éthers avec des polymères vinylaromatiques.